(19) Europäisches Patentamt
European Patent Office
Office européen des brevets

(11) **EP 2 535 752 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(51) Int Cl.:
***G02B 13/08*** *(2006.01)*

(21) Anmeldenummer: **12171964.5**

(22) Anmeldetag: **14.06.2012**

(54) **Anamorphotisches Objektiv**

Anamorphic objective

Objectif anamorphoseur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2011 DE 102011077509**

(43) Veröffentlichungstag der Anmeldung:
**19.12.2012 Patentblatt 2012/51**

(73) Patentinhaber: **Carl Zeiss AG**
**73447 Oberkochen (DE)**

(72) Erfinder:
• **Dodoc, Aurelian**
  **89522 Heidenheim (DE)**

• **Bannert, Christian**
  **73434 Aalen (DE)**
• **Blahnik, Vladan**
  **73447 Oberkochen (DE)**
• **Sehr, Holger**
  **99425 Weimar (DE)**

(74) Vertreter: **Tongbhoyai, Martin**
**Freischem & Partner**
**Patentanwälte mbB**
**Salierring 47-53**
**50677 Köln (DE)**

(56) Entgegenhaltungen:
DE-A1-102006 057 955    DE-A1-102007 005 168
JP-A- 2003 131 125    US-A- 3 990 785
US-A- 5 671 093    US-A1- 2007 133 107

**Beschreibung**

Die Erfindung betrifft ein anamorphotisches Objektiv zur Abbildung eines Objekts auf eine Bilderfassungseinheit. Das anamorphotische Objektiv ist dabei insbesondere für eine Kamera und/oder einen Projektor vorgesehen. Ein anamorphotisches Objektiv wird beispielsweise verwendet, um ein Objekt auf ein fest vorgegebenes Format einer Bilderfassungseinheit (beispielsweise ein Film oder ein digitales Aufnahmemedium) durch Komprimierung abzubilden. Bei Verwendung eines anamorphotischen Objektivs für die Projektion wird eine zuvor komprimierte Abbildung beispielsweise auf einer Leinwand entzerrt dargestellt.

Optische Systeme, welche optische Elemente aufweisen, weisen in der Regel eine Achse auf, um welche alle optischen Elemente des optischen Systems symmetrisch aufgebaut sind. Die vorgenannte Achse wird als optische Achse des optischen Systems bezeichnet. Die optischen Elemente sind rotationssymmetrisch aufgebaut.

Ein anamorphotisches Objektiv, welches ebenfalls optische Elemente aufweist, weist keine derartige Achse als Symmetrieachse auf. Vielmehr weist das anamorphotische Objektiv mindestens eine Symmetrieebene auf, um welche zumindest einige der optischen Elemente des anamorphotischen Objektivs spiegelsymmetrisch aufgebaut sind.

Die vorliegende Erfindung betrifft ein anamorphotisches Objektiv, das zwei Symmetrieebenen aufweist, nämlich eine erste Symmetrieebene und eine zweite Symmetrieebene. Die erste Symmetrieebene ist zu der zweiten Symmetrieebene senkrecht angeordnet. Das anamorphotische Objektiv weist mindestens ein Linsenelement mit einer Fläche auf, welche spiegelsymmetrisch hinsichtlich der ersten Symmetrieebene und der zweiten Symmetrieebene aufgebaut ist. Ein derartiges Linsenelement kann als anamorphotisches Linsenelement bezeichnet werden. Als eine andere Bezeichnung kann beispielsweise für dieses Linsenelement die Bezeichnung anamorphotisches optisches Element gewählt sein.

Die vorgenannte Fläche des anamorphotischen Linsenelements kann auch als eine anamorphotische Fläche bezeichnet werden. Diese zeichnet sich dadurch aus, dass sie in der ersten Symmetrieebene eine erste Krümmung und in der zweiten Symmetrieebene eine zweite Krümmung aufweist. Die erste Krümmung und die zweite Krümmung können unterschiedlich sein. Ist/sind die erste Krümmung und/oder die zweite Krümmung null (bzw. unendlich), dann ist die anamorphotische Fläche zylindrisch. Wenn die erste Krümmung und die zweite Krümmung verschieden sind, aber dieselben Vorzeichen aufweisen, dann ist die anamorphotische Fläche torisch ausgebildet. Sind die Vorzeichen unterschiedlich zueinander, dann ist die anamorphotische Fläche eine Sattelfläche.

Das anamorphotische optische Element weist hinsichtlich der ersten Symmetrieebene eine erste Brechkraft und hinsichtlich der zweiten Symmetrieebene eine zweite Brechkraft auf. Die erste Brechkraft kann zur zweiten Brechkraft unterschiedlich sein.

Die erste Symmetrieebene und die zweite Symmetrieebene schneiden sich und weisen eine Schnittgerade (also eine Schnittlinie) auf. Diese Schnittlinie bildet eine optische Achse eines optischen Elements des anamorphotischen Objektivs. Da das anamorphotische Objektiv in der Regel aus mehreren optischen Elementen zusammengesetzt ist, weisen die mehreren optischen Elemente jeweils eine optische Achse auf, die sich allerdings in der Regel überlagern und eine gemeinsame optische Achse bilden. Diese gemeinsame optische Achse ist die optische Achse des anamorphotischen Objektivs.

Aus dem Stand der Technik sind anamorphotische Objektive bekannt, die in drei Kategorien eingeordnet werden können.

Eine erste Kategorie betrifft Objektive mit einem anamorphotischen Vorsatzsystem. Derartige Objektive sind beispielsweise aus der DE 36 29 438 A1 und der US 4,362,366 bekannt. Ein anamorphotisches Vorsatzsystem weist in der Regel mehrere voneinander getrennte Linsengruppen auf. Ein Nachteil von Objektiven dieser Kategorie ist, dass das anamorphotische Vorsatzsystem in der Regel einen großen Durchmesser sowie eine große Masse aufweist. Das anamorphotische Vorsatzsystem ist daher recht schwer. Ferner hat sich gezeigt, dass eine Fokussierung bei Objektiven dieser Kategorie schwierig durchzuführen ist.

Eine zweite Kategorie von Objektiven betrifft Objektive mit mindestens zwei Teilsystemen. Ein erstes Teilsystem ist als rotationssymmetrisches Objektiv mit mehreren Linsen ausgebildet, die von einem Objekt aus gesehen in Richtung einer Bilderfassungseinheit nacheinander angeordnet sind. Zwischen einer letzten Linse des rotationssymmetrischen Objektivs und einer Bilderfassungseinheit ist ein weiteres Teilssystem mit einem anamorphotischen optischen Element angeordnet. Ein derartiges Objektiv ist beispielsweise aus der US 2006/0050403 A1 bekannt.

Eine dritte Kategorie von Objektiven betrifft anamorphotische Objektive, die mindestens eine erste Linse und mindestens eine zweite Linse aufweisen. Zwischen der ersten Linse und der zweiten Linse ist mindestens ein anamorphotisches optisches Element angeordnet. Eine derartige Anordnung eines anamorphotischen Objektivs ist beispielsweise aus der DE 10 2008 021 341 A1 bekannt.

US 2007/0133107 A1 offenbart ein anamorphotisches Objektiv mit den Merkmalen des Oberbegriffs des Anspruchs 1.

Betrachtet man nun die Abbildung eines axialen Objekts (also eines Objekts auf der optischen Achse) mittels eines anamorphotischen optischen Elements, so stellt man fest, dass diese Abbildung paraxial astigmatisch ist. Dies bedeutet, dass Bildpunktlagen der Abbildung des axialen Objekts in der ersten Symmetrieebene und der zweiten Symmetrieebene verschieden weit weg von dem anamorphotischen optischen Element sind. Die Bildpunktlagen in der ersten Symmetrieebene und der zweiten Symmetrieebene weisen demnach einen unterschiedlichen Abstand zu dem anamorphotischen optischen Element auf.

Betrachtet man hingegen die Abbildung eines axialen Objekts mittels eines rotationssymmetrischen optischen Elements, so stellt man fest, dass die Abbildung des axialen Objekts paraxial stigmatisch ist. Dies bedeutet, dass ein als axiales Objekt ausgebildeter Punkt auf einen Abbildungspunkt abgebildet wird. Allerdings kann die Abbildung eines extraaxialen Objekts (also eines Objekts, welches nicht axial ist) mittels eines rotationssymmetrischen optischen Elements wegen vorhandener Aberrationen astigmatisch sein.

Bei einer Aufnahme eines Fotos bei einer Aufnahme eines Bildes für eine Filmaufnahme und/oder bei einer Projektion eines Bildes oder eines Fotos ist eine astigmatische Abbildung mittels eines Objektivs nicht wünschenswert. Vielmehr ist man bestrebt, eine stigmatische Abbildung mittels eines Objektivs für die vorgenannten Anwendungen zu erzielen, da eine stigmatische Abbildung zu einer besseren Bildqualität führt.

Der Erfindung liegt daher die Aufgabe zugrunde, ein anamorphotisches Objektiv anzugeben, das geeignet ist, eine stigmatische Abbildung eines Objekts auf einer Bilderfassungseinheit zu erzeugen.

Erfindungsgemäß wird diese Aufgabe mit einem anamorphotischen Objektiv mit den Merkmalen des Anspruchs 1 gelöst. Ein optisches System mit einem derartigen anamorphotischen Objektiv ist durch die Merkmale des Anspruchs 21 gegeben. Weitere und/oder alternative Merkmale der Erfindung ergeben sich aus der nachfolgenden Beschreibung, den nachfolgenden Ansprüchen und/oder den beigefügten Figuren.

Gemäß der Erfindung ist das anamorphotische Objektiv zur Abbildung eines Objekts auf eine Bilderfassungseinheit vorgesehen. Das anamorphotische Objektiv weist mindestens eine erste Symmetrieebene und mindestens eine zweite Symmetrieebene auf, wobei die erste Symmetrieebene und die zweite Symmetrieebene senkrecht zueinander orientiert sind. Die erste Symmetrieebene und die zweite Symmetrieebene schneiden sich und weisen eine Schnittgerade (Schnittlinie) auf.

Das erfindungsgemäße anamorphotische Objektiv weist ferner mindestens einen ersten Objektivabschnitt und mindestens einen zweiten Objektivabschnitt auf. Von einem abzubildenden Objekt in Richtung einer Bilderfassungseinheit gesehen sind zunächst der erste Objektivabschnitt und anschließend der zweite Objektivabschnitt angeordnet. Zwischen dem ersten Objektivabschnitt und dem zweiten Objektivabschnitt ist eine Blende angeordnet. Im ersten Objektivabschnitt ist mindestens ein erstes anamorphotisches optisches Element angeordnet. Ferner ist im zweiten Objektivabschnitt mindestens ein zweites anamorphotisches optisches Element angeordnet. Das erfindungsgemäße anamorphotische Objektiv erfüllt die folgenden Bedingungen:

$$\frac{f'_T}{f'_W} = AF \quad \text{(Bedingung 1)}$$

sowie

$$s'_T = s'_W \quad \text{(Bedingung 2)}$$

$f'_T$ ist die Brennweite des erfindungsgemäßen anamorphotischen Objektivs in Bezug zur ersten Symmetrieebene. Ferner ist $f'_W$ die Brennweite des erfindungsgemäßen anamorphotischen Objektivs in Bezug zur zweiten Symmetrieebene. Die erste Symmetrieebene wird hier mit dem Buchstaben "T" gekennzeichnet. Hingegen wird die zweite Symmetrieebene mit dem Buchstaben "W" gekennzeichnet. Die Brennweite des erfindungsgemäßen anamorphotischen Objektivs in der ersten Symmetrieebene T ist eine lange Brennweite und die Brennweite des erfindungsgemäßen anamorphotischen Objektivs in der zweiten Symmetrieebene W ist eine kurze Brennweite. Dies bedeutet, dass $f'_T$ größer als $f'_W$ ist. Mit AF ist ein vorgegebener anamorphotischer Faktor gekennzeichnet, auf den weiter unten nochmals eingegangen wird.

Ferner ist $s'_T$ ein erster Abstand des zweiten Objektivabschnitts zu einer Bilderfassungseinheit in der ersten Symmetrieebene T. Genauer gesagt ist dies der Abstand vom Scheitel einer letzten optischen Fläche, die an dem zweiten Objektivabschnitt angeordnet ist, zu einer Bilderfassungseinheit in der ersten Symmetrieebene T und wobei - von einem abzubildenden Objekt in Richtung einer Bilderfassungseinheit gesehen - keine weitere optische Fläche zwischen der letzten optischen Fläche und einer Bilderfassungseinheit angeordnet ist. $s'_W$ ist ein zweiter Abstand des zweiten Objektivabschnitts zu einer Bilderfassungseinheit in der zweiten Symmetrieebene W. Genauer gesagt ist dies der Abstand vom Scheitel der vorgenannten letzten optischen Fläche zu einer Bilderfassungseinheit in der zweiten Symmetrieebene W.

Überlegungen haben ergeben, dass durch die vorbeschriebene Anordnung der einzelnen Elemente und die Erfüllung der vorgenannten Bedingungen ein stigmatisches Bild auf einer Bilderfassungseinheit durch das erfindungsgemäße anamorphotische Objektiv erzielt werden kann. Um einen bestimmten und vorgegebenen anamorphotischen Faktor zu erzielen, erfüllt das erfindungsgemäße anamorphotische Objektiv die Bedingung 1.

Insbesondere ist es zusätzlich oder alternativ vorgesehen, dass der erste Objektivabschnitt eine erste Linsengruppe mit negativer Brechkraft, eine zweite Linsengruppe, eine dritte Linsengruppe und eine vierte Linsengruppe mit positiver Brechkraft aufweist. Beispielsweise ist es ferner vorgesehen, dass - von einem abzubildenden Objekt in Richtung einer Bilderfassungseinheit - zunächst die erste Linsengruppe, dann die zweite Linsengruppe, dann die dritte Linsengruppe und dann die vierte Linsengruppe angeordnet sind. Dabei wird vorstehend und auch nachstehend unter einer Linsengruppe eine Anordnung aus mindestens zwei Linsenelementen verstanden. Alternativ hierzu kann eine Linsengruppe auch aus nur einem einzelnen Linsenelement bestehen. Auf die einzelnen Linsengruppen wird weiter unten noch näher eingegangen.

Das erfindungsgemäße anamorphotische Objektiv ist insbesondere dazu vorgesehen, Objekte, welche in einem unterschiedlichen Abstand zum erfindungsgemäßen anamorphotischen Objektiv angeordnet sind, auf eine Bilderfassungseinheit abzubilden. Um die Position einer Bildebene, beispielsweise an einer Bilderfassungseinheit, konstant zu halten, ist bei einer Ausführungsform des erfindungsgemäßen anamorphotischen Objektivs vorgesehen, die zweite Linsengruppe des ersten Objektivabschnitts mit mindestens einer Fokussiereinheit zu versehen. Die Fokussiereinheit ist beispielsweise als Fokusgruppe ausgebildet. Es wird explizit darauf hingewiesen, dass die Fokusgruppe sowohl aus einem einzelnen Linsenelement oder aber auch aus mehreren Linsenelementen bestehen kann. Nachfolgend wird auf die Fokussierung näher eingegangen.

Bevor ein abzubildendes Objekt durch das erfindungsgemäße anamorphotische Objektiv auf einer Bilderfassungseinheit abgebildet wird, wird es durch die in dem erfindungsgemäßen anamorphotischen Objektiv enthaltenden optischen Elemente abgebildet. Wenn das erfindungsgemäße anamorphotische Objektiv ein erstes optisches Element aufweist, wird das abzubildende Objekt von dem ersten optischen Element des anamorphotischen Objektivs in ein Zwischenbild abgebildet. Das Zwischenbild kann reell oder virtuell sein. Das so erzeugte Zwischenbild wird wiederum von einem weiteren, zweiten optischen Element des anamorphotischen Objektivs wiederum in ein weiteres Zwischenbild abgebildet. Wenn nun vor der Fokussiereinheit des erfindungsgemäßen anamorphotischen Objektivs weitere optische Elemente angeordnet sind, so erzeugen diese ein Zwischenbild, welches nunmehr als Objekt für die Fokussiereinheit dient. Hiervon ausgehend basiert das Ausführungsbeispiel auf folgenden Überlegungen. Ein astigmatisches Bild, welches auch ein Zwischenbild sein kann, wird dann erzeugt, wenn entweder ein astigmatisches Objekt, das auch ein Zwischenbild sein kann, von einem rotationssymmetrischen optischen Element abgebildet wird oder ein stigmatisches Objekt, das auch ein Zwischenbild sein kann, von einem anamorphotischen optischen Element abgebildet wird. Ist das abzubildende Objekt für ein rotationssymmetrisches optisches Element stigmatisch, so ist das mit diesem rotationssymmetrischen optischen Element erzeugte Bild ebenfalls stigmatisch. Das Ausführungsbeispiel beruht nun auf dem Gedanken, dass auch bei der vorliegenden Erfindung ein durch die Fokussiereinheit abzubildendes Objekt stigmatisch sein sollte. Demnach sieht das Ausführungsbeispiel des erfindungsgemäßen anamorphotischen Objektivs zusätzlich oder alternativ vor, dass der erste Objektivabschnitt mit mindestens einer Fokussiereinheit versehen ist, welche mindestens zwei rotationssymmetrische optische Elemente aufweist. Bei einer alternativen Ausführungsform ist auch nur ein einzelnes rotationssymmetrisches optisches Element vorgesehen. Insbesondere ist es vorgesehen, dass die Fokussiereinheit ausschließlich aus rotationssymmetrischen optischen Elementen zusammengesetzt ist.

Wie oben bereits erwähnt, ist es bei einem Ausführungsbeispiel vorgesehen, dass der erste Objektivabschnitt des erfindungsgemäßen anamorphotischen Objektiv vier Linsengruppen aufweist. Dabei ist die zweite Linsengruppe als die Fokussiereinheit ausgebildet und ist zwischen der ersten Linsengruppe und der dritten Linsengruppe angeordnet. Die dritte Linsengruppe ist beispielsweise als das erste anamorphotische optische Element ausgebildet, welches in dem ersten Objektivabschnitt angeordnet ist. Demnach sind zwischen einem abzubildenden Objekt und dem ersten anamorphotischen optischen Element (oder einem ersten anamorphotischen Linsenelement, falls das erste anamorphotische optische Element aus mehreren Teilelementen zusammengesetzt ist) nur rotationssymmetrische Linsenelemente angeordnet. Somit erzeugt die erste Linsengruppe, die im Bereich zwischen einem abzubildenden Objekt und dem ersten anamorphotischen optischen Element angeordnet ist, ein für das erste anamorphotische Element vorgesehenes stigmatisches Zwischenbild an derselben Position für jede Objektlage.

Bei einer weiteren Ausführungsform des erfindungsgemäßen anamorphotischen Objektivs ist es zusätzlich oder alternativ vorgesehen, dass während eines Fokussiervorgangs mittels der Fokussiereinheit die folgende Bedingung erfüllt ist:

$$\frac{\beta_T}{\beta_W} = AF \qquad \text{(Bedingung 3)}.$$

wobei $\beta_T$ eine erste Vergrößerung des anamorphotischen Objektivs in der ersten Symmetrieebene T ist, $\beta_W$ eine zweite Vergrößerung des anamorphotischen Objektivs in der zweiten Symmetrieebene W ist sowie AF der vorgegebene anamorphotische Faktor ist.

Bei einer weiteren Ausführungsform des erfindungsgemäßen anamorphotischen Objektivs ist es zusätzlich oder alternativ vorgesehen, dass die dritte Linsengruppe das erste anamorphotische optische Element aufweist, wie oben bereits erwähnt. Die Fokussiereinheit ist demnach von einem abzubildenden Objekt in Richtung einer Bilderfassungseinheit gesehen vor dem ersten anamorphotischen optischen Element angeordnet.

Bei einem wiederum weiteren Ausführungsbeispiel des erfindungsgemäßen anamorphotischen Objektivs ist es zusätzlich oder alternativ vorgesehen, dass die Fokussiereinheit mindestens ein erstes Linsenelement und mindestens ein zweites Linsenelement aufweist, wobei das erste Linsenelement und das zweite Linsenelement aus unterschiedlichen Glasarten gebildet sein können. Beispielsweise ist das erste Linsenelement aus dem Glas KF9 des Unternehmens Schott gebildet. Das zweite Linsenelement ist beispielsweise aus dem Glas FK51 des Unternehmens Schott gebildet. Es wird explizit darauf hingewiesen, dass die Erfindung nicht auf die vorgenannten Glasarten eingeschränkt ist. Vielmehr kann jedes geeignete Glas verwendet werden. Dieses Ausführungsbeispiel zeichnet sich dadurch aus, dass Aberrationen bei der Fokussierung korrigiert werden können. Das erste Linsenelement kann eine erste Linsenbrechkraft aufweisen. Hingegen kann das zweite Linsenelement eine zweite Linsenbrechkraft aufweisen. Die erste Linsenbrechkraft und die zweite Linsenbrechkraft können unterschiedliche Vorzeichen aufweisen.

Bei einem weiteren Ausführungsbeispiel des erfindungsgemäßen anamorphotischen Objektivs bilden das erste Linsenelement und das zweite Linsenelement ein Dublett. Bei einer wiederum weiteren Ausführungsform des erfindungsgemäßen anamorphotischen Objektivs ist es zusätzlich oder alternativ vorgesehen, dass das erste Linsenelement mindestens eine erste Fläche aufweist, die asphärisch ausgebildet ist. Wiederum zusätzlich oder alternativ hierzu ist es vorgesehen, dass das zweite Linsenelement mindestens eine zweite Fläche aufweist, die asphärisch ausgebildet ist.

Erfindungsgemäß ist es zusätzlich vorgesehen, dass das erste anamorphotische optische Element, das in dem ersten Objektivabschnitt angeordnet ist, in der ersten Symmetrieebene T eine erste Brechkraft und in der zweiten Symmetrieebene W eine zweite Brechkraft aufweist, wobei die erste Brechkraft und die zweite Brechkraft unterschiedliche Vorzeichen aufweisen. Beispielsweise ist es vorgesehen, dass die erste Brechkraft positiv ist und dass die zweite Brechkraft negativ ist. Alternativ hierzu ist es vorgesehen, dass die erste Brechkraft negativ ist und die zweite Brechkraft positiv ist.

Bei einer Ausführungsform des erfindungsgemäßen anamorphotischen Objektivs ist vorgesehen, dass zusätzlich zu dem ersten anamorphotischen optischen Element ein weiteres anamorphotisches optisches Element in Form eines dritten anamorphotischen Elements in dem ersten Objektivabschnitt angeordnet ist. Insbesondere ist es vorgesehen, dass sowohl das erste anamorphotische optische Element als auch das dritte anamorphotische optische Element in der dritten Linsengruppe angeordnet sind.

Ferner ist es beispielsweise vorgesehen, dass das dritte anamorphotische optische Element in der ersten Symmetrieebene T eine dritte Brechkraft und in der zweiten Symmetrieebene W eine vierte Brechkraft aufweist. Insbesondere ist es vorgesehen, dass die dritte Brechkraft und die vierte Brechkraft unterschiedliche Vorzeichen aufweisen. Bei einer weiteren Ausführungsform weisen die erste Brechkraft des ersten anamorphotischen optischen Elements in der ersten Symmetrieebene T und die dritte Brechkraft des dritten anamorphotischen optischen Elements in der ersten Symmetrieebene T unterschiedliche Vorzeichen auf. Zusätzlich ist es insbesondere vorgesehen, dass die zweite Brechkraft des ersten anamorphotischen optischen Elements in der zweiten Symmetrieebene W und die vierte Brechkraft des dritten anamorphotischen optischen Elements in der zweiten Symmetrieebene W unterschiedliche Vorzeichen aufweisen.

Bei einer noch weiteren Ausführungsform des erfindungsgemäßen anamorphotischen Objektivs ist es vorgesehen, dass zusätzlich zu dem zweiten anamorphotischen optischen Element ein weiteres anamorphotisches optisches Element in Form eines vierten anamorphotischen optischen Elements in dem zweiten Objektivabschnitt angeordnet ist. Somit sieht die Erfindung auch vor, dass der zweite Objektivabschnitt nicht nur ein einzelnes anamorphotisches optisches Element aufweist, sondern auch mehrere anamorphotische optische Elemente aufweisen kann.

Es ist insbesondere vorgesehen, dass das zweite anamorphotische optische Element eine fünfte Brechkraft in der ersten Symmetrieebene T und eine sechste Brechkraft in der zweiten Symmetrieebene W aufweist. Ferner ist es beispielsweise vorgesehen, dass das vierte anamorphotische optische Element eine siebte Brechkraft in der ersten Symmetrieebene T und eine achte Brechkraft in der zweiten Symmetrieebene W aufweist. Die fünfte Brechkraft und die sechste Brechkraft können unterschiedliche Vorzeichen zueinander aufweisen. Auch die siebte Brechkraft und die achte Brechkraft können unterschiedliche Vorzeichen zueinander aufweisen. Bei einer weiteren Ausführungsform ist es beispielsweise vorgesehen, dass die fünfte Brechkraft des zweiten anamorphotischen optischen Elements und die siebte Brechkraft des vierten anamorphotischen optischen Elements in der ersten Symmetrieebene T unterschiedliche Vorzeichen aufweisen. Zusätzlich oder alternativ hierzu ist es vorgesehen, dass die sechste Brechkraft des zweiten anamorphotischen optischen Elements und die achte Brechkraft des vierten anamorphotischen optischen Elements in der zweiten Symmetrieebene W unterschiedliche Vorzeichen aufweisen.

Bei einem weiteren Ausführungsbeispiel des erfindungsgemäßen anamorphotischen Objektivs ist zusätzlich oder alternativ vorgesehen, dass das zweite anamorphotische optische Element und das vierte anamorphotische optische Element, die beide in dem zweiten Objektivabschnitt angeordnet sind, an einer anamorphotischen Fläche (nachfolgend zweite anamorphotische Fläche genannt) miteinander verkittet sind. Sie bilden ein anamorphotisches Dublett (nachfolgend zweites anamorphotisches Dublett genannt). Hierdurch ist eine Korrektur von Farbfehlern in der ersten Symmetrieebene T und in der zweiten Symmetrieebene W getrennt möglich. Bei einer weiteren Ausführungsform des erfindungsgemäßen anamorphotischen Objektivs sind alternativ oder zusätzlich das erste anamorphotische optische Element und das dritte anamorphotische optische Element an einer anamorphotischen Fläche (nachfolgend erste anamorphotische Fläche genannt) miteinander verkittet und bilden ein anamorphotisches Dublett (nachfolgend erstes anamorphotisches Dublett genannt).

Bei einem weiteren Ausführungsbeispiel des erfindungsgemäßen anamorphotischen Objektivs ist es zusätzlich oder alternativ vorgesehen, dass das zweite anamorphotische Dublett in dem zweiten Objektivabschnitt in der zweiten Symmetrieebene W, welche gegenüber der ersten Symmetrieebene T eine kürzere Brennweite aufweist, eine positive Brechkraft und in der ersten Symmetrieebene T eine negative Brechkraft aufweist. Hierdurch wird es ermöglicht, dass die Bildfeldkrümmung in der ersten Symmetrieebene T und/oder in zweiten Symmetrieebene W korrigiert wird.

Bei einem wiederum weiteren Ausführungsbeispiel des erfindungsgemäßen anamorphotischen Objektivs ist es zusätzlich oder alternativ vorgesehen, dass in der ersten Linsengruppe mindestens eine asphärische Fläche angeordnet ist.

Ferner ist es beispielsweise vorgesehen, dass bei einer Ausführungsform des erfindungsgemäßen anamorphotischen Objektivs in der ersten Linsengruppe mindestens eine Linse aus einem Material angeordnet ist, welches eine niedrige Dispersion aufweist, das heißt beispielsweise eine Abbezahl größer oder gleich 80 aufweist. Zusätzlich oder alternativ hierzu ist es vorgesehen, dass zwischen der zweiten Linsengruppe und der Blende mindestens zwei Linsen mit positiver Brechkraft angeordnet sind und dass die zwei Linsen aus einem Material ausgebildet sind, das eine Abbezahl größer oder gleich 80 aufweist und somit ebenfalls eine geringe Dispersion aufweist.

Bei einer wiederum weiteren Ausführungsform des erfindungsgemäßen anamorphotischen Objektivs ist es beispielsweise vorgesehen, dass

- in der zweiten Symmetrieebene das erste anamorphotische optische Element eine negative Brechkraft aufweist,
- in der zweiten Symmetrieebene das zweite anamorphotische optische Element eine positive Brechkraft aufweist,
- in der ersten Symmetrieebene das erste anamorphotische optische Element eine positive Brechkraft aufweist, und dass
- in der ersten Symmetrieebene das zweite anamorphotische optische Element eine negative Brechkraft aufweist.

Bei einer wiederum weiteren Ausführungsform des erfindungsgemäßen anamorphotischen Objektivs ist es beispielsweise vorgesehen, dass

- in der zweiten Symmetrieebene das erste anamorphotische optische Element eine negative Brechkraft aufweist,
- in der zweiten Symmetrieebene das dritte anamorphotische optische Element eine positive Brechkraft aufweist,
- in der ersten Symmetrieebene das erste anamorphotische optische Element eine positive Brechkraft aufweist, und dass
- in der ersten Symmetrieebene das dritte anamorphotische optische Element eine negative Brechkraft aufweist.

Ferner ist es beispielsweise vorgesehen, dass

- in der zweiten Symmetrieebene das zweite anamorphotische optische Element eine negative Brechkraft aufweist,
- in der zweiten Symmetrieebene das vierte anamorphotische optische Element eine positive Brechkraft aufweist,
- in der ersten Symmetrieebene das zweite anamorphotische optische Element eine positive Brechkraft aufweist, und dass
- in der ersten Symmetrieebene das vierte anamorphotische optische Element eine negative Brechkraft aufweist.

Bei einer Ausführungsform des erfindungsgemäßen anamorphotischen Objektivs ist es zusätzlich oder alternativ vorgesehen, dass

- das anamorphotische Objektiv eine erste Linsenfläche aufweist, die derart angeordnet ist, dass zwischen einem abzubildenden Objekt und der ersten Linsenfläche keine weitere Linsenfläche angeordnet ist,
- das anamorphotische Objektiv eine zweite Linsenfläche aufweist, die derart angeordnet ist, dass zwischen der zweiten Linsenfläche und einer Bilderfassungseinheit keine weitere Linsenfläche angeordnet ist, und dass
- der Abstand der ersten Linsenfläche bis zu der Blende mindestens drei mal größer ist als der Abstand der Blende zur zweiten Linsenfläche.

Beispielsweise ist das Verhältnis des Abstands der ersten Linsenfläche bis zu der Blende sowie des Abstands der Blende zur zweiten Linsenfläche ungefähr 155/28, beispielsweise 155,28/28,03.

Die weiter unten genannten Systemdaten eines Ausführungsbeispiels gelten für ein anamorphotisches Objektiv, das mindestens eines der vorstehend oder nachtstehend genannten Merkmale oder eine Kombination von mindestens zwei der vorgenannten oder nachstehenden Merkmale aufweist.

Die Erfindung betrifft ferner ein optisches System, beispielsweise eine Kamera oder ein Projektor, mit einer Bilderfassungseinheit und einem anamorphotischen Objektiv, das mindestens eines der vorstehend oder nachstehend genannten Merkmale oder eine Kombination von mindestens zwei der vorgenannten oder nachstehenden Merkmale aufweist.

Nachfolgend wird die Erfindung anhand eines Ausführungsbeispiels näher erläutert. Dabei zeigen

Figur 1A      eine erste Schnittdarstellung eines anamorphotischen Objektivs in einer ersten Fokusposition;

Figur 1B      eine zweite Schnittdarstellung des anamorphotischen Objektivs nach Figur 1A in einer zweiten Fokusposition;

Figur 2A      eine dritte Schnittdarstellung des anamorphotischen Objektivs nach Figur 1A in der ersten Fokusposition; sowie

Figur 2B      eine vierte Schnittdarstellung des anamorphotischen Objektivs nach Figur 1A in der zweiten Fokusposition.

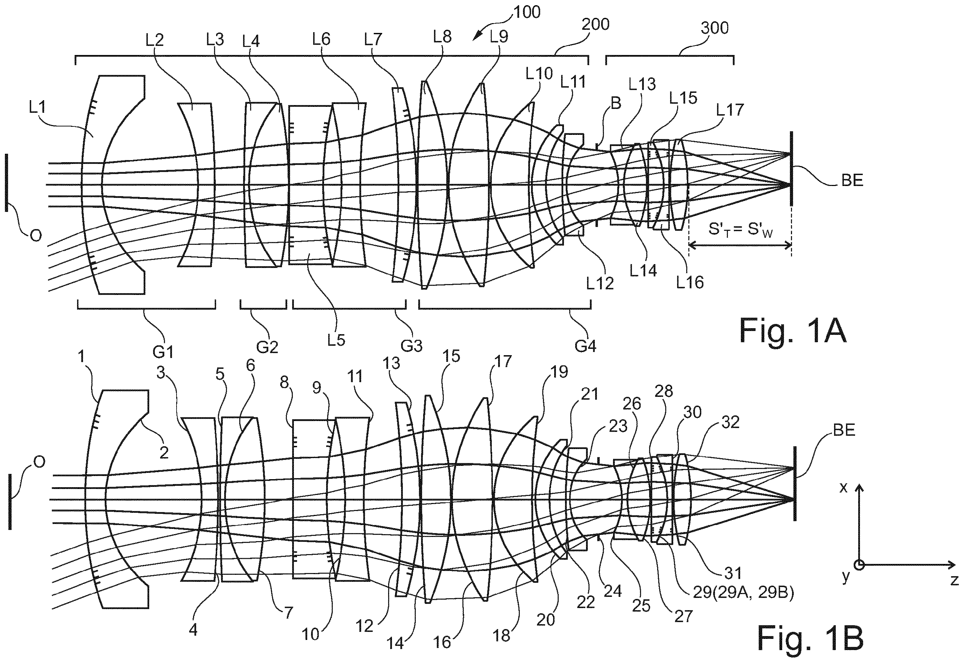

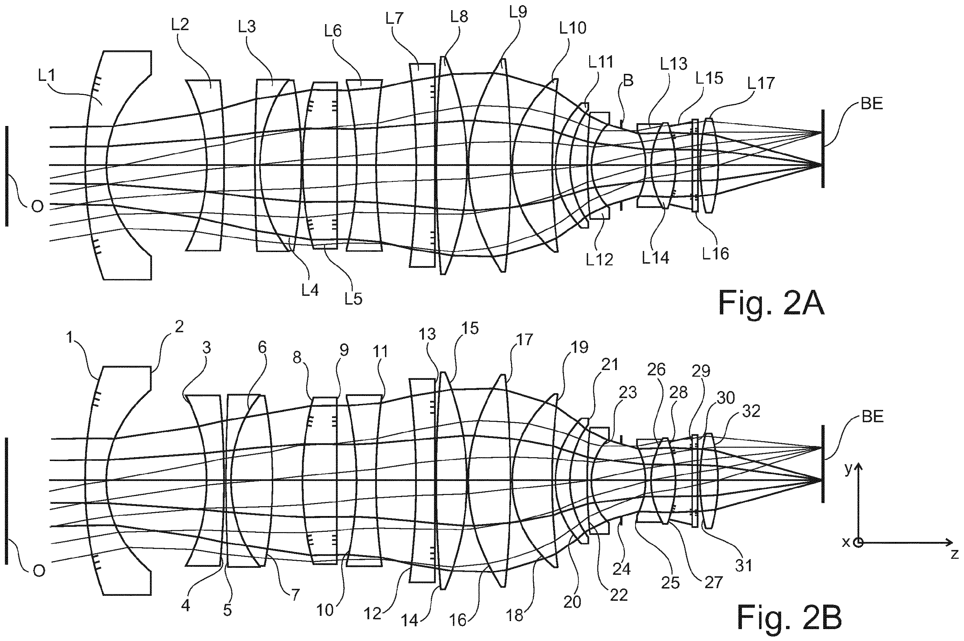

Die **Figuren 1A und 1B** zeigen Darstellungen eines X-Z Schnitts (Ebene X-Z) durch ein erfindungsgemäßes anamorphotisches Objektiv 100 in zwei unterschiedlichen Fokuspositionen, nämlich einer ersten Fokusposition (**Figur 1A**) und einer zweiten Fokusposition (**Figur 1B**). Hingegen zeigen die **Figuren 2A und 2B** Darstellungen eines Y-Z Schnitts (Ebene Y-Z) durch das anamorphotische Objektiv 100 in den zwei unterschiedlichen Fokuspositionen, nämlich in der ersten Fokusposition (**Figur 2A**) und in der zweiten Fokusposition (**Figur 2B**). Die Ebene Y-Z ist die erste Symmetrieebene T. Hingegen ist die Ebene X-Z die zweite Symmetrieebene W. Nachfolgend wird das anamorphotische Objektiv 100 näher erläutert.

Das anamorphotische Objektiv 100 dient der Abbildung eines Objekts O (nur schematisch dargestellt) auf eine Bilderfassungseinheit BE. Es weist einen ersten Objektivabschnitt 200 und einen zweiten Objektivabschnitt 300 auf, welche sich jeweils aus mehreren optischen Elementen zusammensetzen. Der Aufbau des ersten Objektivabschnitts 200 und der Aufbau des zweiten Objektivabschnitts 300 werden nachfolgend nun näher erläutert.

Der erste Objektivabschnitt 200 weist mehrere Linsengruppen auf, nämlich eine erste Linsengruppe G1 mit negativer Brechkraft, eine zweite Linsengruppe G2 mit positiver Brechkraft, eine anamorphotische dritte Linsengruppe G3 und eine vierte Linsengruppe G4 mit positiver Brechkraft. Nachfolgend wird auf die einzelnen Linsengruppen näher eingegangen.

Die erste Linsengruppe G1 weist eine erste Linse L1 mit negativer Brechkraft und eine zweite Linse L2 mit negativer Brechkraft auf. Beispielsweise hat die erste Linse L1 eine zu dem Objekt O gerichtete konvexe Fläche 1 und eine zur Bilderfassungseinheit BE gerichtete konkave Fläche 2. Insbesondere ist es vorgesehen, dass mindestens eine der beiden vorgenannte Flächen, nämlich die Fläche 1 und die Fläche 2, eine asphärische Form aufweist. Beispielsweise ist die Fläche 1 asphärisch ausgebildet. Die zweite Linse L2 weist ebenfalls zwei Flächen auf, nämlich eine zu dem Objekt O gerichteten Fläche 3 und eine zur Bilderfassungseinheit BE gerichtete konkave Fläche 4. Die erste Linse L1 und die zweite Linse L2 der ersten Linsengruppe G1 sind rotationssymmetrisch. Somit erzeugt die erste Linsengruppe G1 von dem stigmatischen Objekt O ein stigmatisches Zwischenbild (nicht dargestellt), welches von der zweiten Linsengruppe G2 wiederum abgebildet wird. Um Farbfehler zu korrigieren, ist es beispielsweise vorgesehen, mindestens eine der beiden Linsen der ersten Linsengruppe G1 aus einem Material mit niedriger Dispersion zu fertigen. Beispielsweise wird dies durch ein Material gewährleistet, dass eine Abbezahl von größer oder gleich 80 aufweist. Bei der hier dargestellten Ausführungsform wurde für das Material der ersten Linse L1 und der zweiten Linse L2 das Glas SFPL53 (Bezeichnung nach dem Unternehmens Schott) verwendet, das eine Abbezahl größer als 90 aufweist.

Die zweite Linsengruppe G2 hat positive Brechkraft und ist als Fokussiereinheit ausgelegt. Sie weist zwei Linsen auf, nämlich eine dritte Linse L3 und eine vierte Linse L4, deren Brechkräfte unterschiedliche Vorzeichen aufweisen. Die dritte Linse 3 weist eine zu dem abzubildenden Objekt O gerichtete Fläche 5 auf. Die vierte Linse 4 weist eine zu dem abzubildenden Objekt O gerichtete Fläche 6 und eine zu der Bilderfassungseinheit BE gerichtete Fläche 7 auf. Die dritte Linse L3 und die vierte Linse L4 sind an der Fläche 6 zu einem Dublett zusammengekittet. Die zweite Linsengruppe G2 ist als Fokussiereinheit vorgesehen und dient somit einem Fokussiervorgang in dem anamorphotischen Objektiv 100. Hierzu ist die zweite Linsengruppe G2 beweglich entlang der optischen Achse OA ausgebildet. Zur Fokussierung wird die zweite Linsengruppe G2 beispielsweise in Richtung der Bilderfassungseinheit BE bewegt. Von der zweiten Linsengruppe G2 (Fokussiereinheit) in Richtung des Objekts O aus gesehen sind ausschließlich rotationssymmetrische optische Elemente angeordnet.

Bei einer alternativen Ausführungsform weist die zweite Linsengruppe G2 negative Brechkraft auf und wird zur Fokussierung beispielsweise in Richtung des abzubildenden Objekts O bewegt.

Die dritte Linse L3 und die vierte Linse L4 sind aus unterschiedlichen Glasarten gebildet. So ist es bei diesem Ausführungsbeispiel vorgesehen, die dritte Linse L3 aus dem Glas KF9 des Unternehmens Schott auszubilden. Hingegen ist die vierte Linse L4 bei diesem Ausführungsbeispiel aus dem Glas FK51 des Unternehmens Schott ausgebildet. Auf diese Weise ist es besonders gut möglich, Aberrationen bei der Fokussierung zu korrigieren.

Die dritte Linsengruppe G3 ist anamorphotisch. Sie weist ein erstes anamorphotisches Linsenelement in Form einer fünften Linse L5, eine weitere rotationssymmetrische Linse in Form einer sechsten Linse L6 mit negativer Brechkraft und ein weiteres anamorphotisches Linsenelement in Form einer siebten Linse L7 auf. Die fünfte Linse L5 weist eine zu dem Objekt O gerichtete Fläche 8 und eine zu der Bilderfassungseinheit BE gerichtete Fläche 9 auf. Ferner weist die sechste Linse L6 eine zu dem Objekt O gerichtete Fläche 10 und eine zu der Bilderfassungseinheit BE gerichtete Fläche 11 auf. Darüber hinaus weist die siebte Linse L7 eine zu dem Objekt O gerichtete Fläche 12 und eine zu der Bilderfassungseinheit BE gerichtete Fläche 13 auf.

Die Flächen 8 und 9 der fünften Linse L5 sind zylindrisch ausgebildet. Die Brechkraft der fünften Linse L5 in der Ebene X-Z und die Brechkraft der fünften Linse L5 in der Ebene Y-Z haben verschiedene Vorzeichen. Die Brechkraft der fünften Linse L5 ist in der Ebene X-Z negativ. Hingegen ist die Brechkraft der fünften Linse L5 in der Ebene Y-Z positiv. Ferner weisen die Fläche 8 und die Fläche 9 einen in den weiter unten genannten Systemdaten angegeben bestimmten Radius in einer x-Richtung und in einer y-Richtung auf.

Die sechste Linse L6 der dritten Linsengruppe G3 ist rotationssymmetrisch und weist eine bikonkave Form auf. Das weitere anamorphotische Linsenelement in Form der siebten Linse L7 weist - wie oben bereits erwähnt - die Fläche 12 und die Fläche 13 auf. Die Fläche 12 ist rotationssymmetrisch ausgebildet. Hingegen ist die Fläche 13 zylindrisch ausgebildet. In der Ebene X-Z ist die Brechkraft der siebten Linse L7 positiv. Hingegen ist die Brechkraft in der Ebene Y-Z negativ. Radien der Fläche 13 sind in der Ebene X-Z und in der Ebene Y-Z unterschiedlich.

Es ist demnach bei dem in den Figuren dargestellten Ausführungsbeispiel vorgesehen, dass zum einen das erste anamorphotische optische Element in Form der fünften Linse L5 und zum anderen das weitere anamorphotische optische Element in Form der siebten Linse L7 in der ersten Symmetrieebene und in der zweiten Symmetrieebene jeweils vom Vorzeichen her unterschiedliche Brechkraft aufweisen. Zusätzlich ist es vorgesehen, dass das erste anamorphotische optische Element in Form der fünften Linse L5 und das weitere anamorphotische optische Element in Form der siebten Linse L7 auch untereinander hinsichtlich einer der vorgenannten Ebenen mit Brechkräften mit unterschiedlichen Vorzeichen versehen sind.

Die vierte Linsengruppe G4 des ersten Objektivabschnittes 100 hat eine positive Brechkraft und weist mehre Linsen auf, nämlich eine achte Linse L8, eine neunte Linse L9, eine zehnte Linse L10, eine elfte Linse L11 und eine zwölfte Linse L12. Die vorgenannten Linsen L8 bis L12 sind rotationssymmetrisch ausgebildet. Auch die vorgenannten Linsen L8 bis L12 weisen Flächen auf. So ist die achte Linse L8 mit einer zu dem Objekt O gerichteten Fläche 14 und einer zu der Bilderfassungseinheit BE gerichteten Fläche 15 versehen. Die neunte Linse L9 weist eine zu dem Objekt O gerichtete Fläche 16 und eine zu der Bilderfassungseinheit BE gerichtete Fläche 17 auf. Die zehnte Linse L10 weist eine zu dem Objekt O gerichtete Fläche 18 und eine zu der Bilderfassungseinheit BE gerichtete Fläche 19 auf. Darüber hinaus weist die elfte Linse L11 eine zu dem Objekt O gerichtete Fläche 20 und eine zu der Bilderfassungseinheit BE gerichtete Fläche 21 auf. Hingegen weist die zwölfte Linse L12 eine zu dem Objekt O gerichtete Fläche 22 und eine zu der Bilderfassungseinheit BE gerichtete Fläche 23 auf. Die achte Linse L8, die neunte Linse L9, die zehnte Linse L10 und die elfte Linse L11 haben positive Brechkraft und sind derart im Strahlengang des anamorphotischen Objektivs 100 angeordnet, dass eine sanfte Umlenkung von Strahlbündeln erzielt wird. Unter einer sanften Umlenkung wird dabei eine Umlenkung von Strahlbündeln derart verstanden, wenn geringe Aberrationsbeiträge auftreten. Die Reduktion von Aberrationen bei einer starken Umlenkung (eine Umlenkung, die dann eingesetzt wird, wenn hohe Aberrationsbeiträge auftreten) der Strahlbündel im Bereich der vierten Linsengruppe G4 wird durch die in Richtung der Bilderfassungseinheit BE hin gekrümmte Flächen der achten Linse L8, der neunten Linse L9, der zehnten Linse L10, der elften Linse L11 und der zwölften Linse L12 besonders stark beeinflusst. Um Farbfehler zu korrigieren, ist mindestens eine Linse (bei weiteren Ausführungsformen mindestens zwei Linsen) der vorgenannten Linsen, nämlich der achten Linse L8, der neunten Linse L9, der zehnten Linse L10 und der elften Linse L11, welche positive Brechkraft aufweisen, aus einem Glas gebildet, das eine niedrige Dispersion aufweist, das heißt das Glas weist eine Abbezahl von größer oder gleich 80 auf.

Die zwölfte Linse L12 der vierten Linsengruppe G4 weist negative Brechkraft auf. Die Fläche 23 ist zur Blende B hin konkav ausgebildet. Die zwölfte Linse L12 kann eine besondere Rolle bei der Korrektur der Bildfeldwölbung und der Farbfehler aufweisen. Als Material für die zwölfte Linse L12 wird beispielsweise ein Kurzflint unter der Bezeichnung NKZFS11 verwendet, welcher eine gute chromatische Korrektur ermöglicht.

Wie oben bereits erwähnt, ist zwischen dem ersten Objektivabschnitt 100 und dem zweiten Objektivabschnitt 200 die Blende B angeordnet. Bei diesem Ausführungsbeispiel ist die Blende B als Irisblende ausgebildet, welche eine einstellbare Durchgangsöffnung aufweist. Die Durchgangsöffnung kann verschiedene Öffnungsgrößen einnehmen. Dabei ist es auch vorgesehen, dass die Durchgangsöffnung vollständig geschlossen werden kann.

Der zweite Objektivabschnitt 200 weist mehrere Linsenelemente auf. Mindestens eines dieser Linsenelemente ist anamorphotisch ausgebildet. Besondere Ausführungsformen sehen vor, dass mindestens zwei dieser Linsenelemente anamorphotisch ausgebildet sind. Bei dem in den **Figuren 1A bis 2B** dargestellten Ausführungsbeispiel weist der zweite Objektivabschnitt 200 eine dreizehnte Linse L13, eine vierzehnte Linse L14, eine fünfzehnte Linse L15, eine sechzehnte Linse L16 und eine siebzehnte Linse L17 auf. Auch die vorgenannten Linsen L13 bis L17 weisen Flächen auf. So ist die dreizehnte Linse L13 mit einer zum Objekt O gerichteten Fläche 25 versehen. Die vierzehnte Linse L14 weist eine zum Objekt O gerichtete Fläche 26 und eine zu der Bilderfassungseinheit BE gerichtete Fläche 27 auf. Ferner weist die fünfzehnte Linse L15 eine zum Objekt O gerichtete Fläche 28 auf. Die sechzehnte Linse L16 weist eine zum Objekt O gerichtete Fläche 29 und eine zu der Bilderfassungseinheit BE gerichtete Fläche 30 auf. Die siebzehnte Linse L17 weist eine zum Objekt O gerichtete Fläche 31 und eine zu der Bilderfassungseinheit BE gerichtete Fläche 32 auf.

Die Fläche 25 der dreizehnten Linse L13 ist zur Blende B hin konkav ausgebildet. Die dreizehnte Linse L13 wird insbesondere zur Korrektur der Bildfeldwölbung und der Farbfehler verwendet. Sie ist mit der vierzehnte Linse L14 verkittet, welche eine positive Brechkraft aufweist.

Die fünfzehnte Linse L15 und die sechzehnte Linse L16 sind miteinander verkittet und bilden ein Dublett. Sie weisen im Grunde die gemeinsame Fläche 29 auf. Die gemeinsame Fläche 29 wird durch eine zu der fünfzehnten Linse L15 zugehörigen Fläche 29A und eine zu der sechzehnten Linse L16 zugehörigen Fläche 29B gebildet. Sowohl die fünfzehnte Linse L15 als auch die sechzehnte Linse L16 sind anamorphotisch ausgebildet. Dabei sind die Fläche 28 und die Fläche 29B der fünfzehnten Linse L15 zylindrisch ausgebildet. Hingegen ist bei der sechzehnten Linse L16 nur die Fläche 29B zylindrisch ausgebildet. Die Fläche 30 der sechzehnten Linse L16 ist asphärisch ausgebildet.

Die Brechkraft der fünfzehnten Linse L15 ist in der X-Z Ebene positiv. In der der Y-Z Ebene ist die Brechkraft der fünfzehnten Linse L15 negativ. Hingegen ist die Brechkraft der sechzehnten Linse L16 in der X-Z Ebene negativ. Die Brechkraft der sechzehnten Linse L16 in der Y-Z Ebene ist positiv.

Somit weisen die fünfzehnte Linse L15 und die sechzehnte Linse L16 unterschiedliche Vorzeichen ihrer Brechkräfte in den beiden vorgenannten zwei Symmetrieebenen auf. Die unterschiedliche Brechkraftverteilung in den zwei Symmetrieebenen dieses Dubletts ermöglicht eine Entkopplung der Aberrationen in den zwei Symmetrieebenen und deren vollständige Korrektur. Besonders gut wirkt das Dublett bei der Korrektur von Farbfehlern.

Eine weitere Korrektur von Fehlern wird durch die asphärische Form der Fläche 30 der sechzehnten Linse L16 bewirkt. Insbesondere hat sich gezeigt, dass die asphärische Fläche 30 zur Korrektur eines Koma und einer schiefen sphärischen Aberration von Strahlenbündeln, die fern der optischen Achse verlaufen, gut geeignet ist.

Die siebzehnte Linse L17 weist positive Brechkraft auf und ist bei dem hier dargestellten Ausführungsbeispiel aus einem Glas mit einer relativ niedrigen Dispersion gebildet (hinsichtlich des Begriffs der niedrigen Dispersion wird auf oben verwiesen), um den Beitrag zum Farbfehler gering zu halten. Beispielsweise wird hier Glas mit der Bezeichnung FK51 verwendet.

Das vorstehend beschriebene anamorphotische Objektiv 100 weist die in der nachfolgenden Tabelle angegebenen Systemdaten auf.

| Fläche | Radius in y-Richtung | Abstand | Glas | Ausbildung | Radius in x-Richtung |
|---|---|---|---|---|---|
| 1* | 163,39681 | 5,881750 | SFPL53 (O) | | |
| 2 | 32,35436 | 29,174111 | | | |
| 3 | -53,01777 | 4,997215 | SFPL53 (O) | | |
| 4 | -264,66870 | D1 | | | |
| 5 | 394,18443 | 1,499824 | KF9 (S) | | |
| 6 | 40,03106 | 12,109742 | FK51 (S) | | |
| 7 | -129,94507 | D2 | | | |
| 8 | 85,36961 | 10,139910 | SLAL18 (O) | CYL | Unendlich |
| 9 | Unendlich | 5,745489 | | CYL | 100,49360 |
| 10 | -90,31778 | 5,584149 | NKZFS4 (S) | | |
| 11 | 169,06360 | 11,536074 | | | |
| 12 | -242,28888 | 5,382441 | NKZFS5 (S) | | |
| 13 | Unendlich | 0,349619 | | CYL | -108,98944 |

(fortgesetzt)

| Fläche | Radius in y-Richtung | Abstand | Glas | Ausbildung | Radius in x-Richtung |
|---|---|---|---|---|---|
| 14 | 339,32392 | 9,204875 | SPHM52 (O) | | |
| 15 | -76,16216 | 0,199947 | | | |
| 16 | 52,53530 | 11,968239 | SFPL53 (O) | | |
| 17 | -398,11407 | 0,601260 | | | |
| 18 | 31,63510 | 11,578191 | SFPL53 (O) | | |
| 19 | 168,76467 | 1,029528 | | | |
| 20 | 24,82604 | 4,192567 | SYGH51 (O) | | |
| 21 | 26,93334 | 4,800256 | | | |
| 22 | 108,72738 | 1,499435 | NKZFS11 (S) | | |
| 23 | 16,99147 | 8,753506 | | | |
| 24 | Unendlich | 7,000000 | | | |
| 25 | -21,61391 | 1,499897 | NKZFS11 (S) | | |
| 26 | 23,10884 | 7,218400 | SLAL14 (O) | | |
| 27 | -31,76636 | 0,198731 | | | |
| 28 | -39,08443 | 4,928972 | NPK51 (S) | CYL | Unendlich |
| 29 | Unendlich | 1,575267 | STIL2 (O) | CYL | -25,37124 |
| 30* | -320,64358 | 0,196759 | | | |
| 31 | 51,81995 | 5,412488 | FK51 (S) | | |
| 32 | -44,93400 | 31,686579 | | | |
| | | | | | |

In der vorstehenden Tabelle sind die Nummern der einzelnen Flächen der einzelnen Linsen angegeben, wobei mit der Nr. 24 die Blende bezeichnet ist. Darüber hinaus sind die Radien in y-Richtung sowie in x-Richtung und der Abstand des Scheitelpunkts einer ersten Fläche zu dem Scheitelpunkt einer nächsten Fläche angegeben. Ferner ist auch die Glasart angegeben, aus der die einzelnen Linsen gebildet sind, wobei mit "O" Glasarten des Unternehmens OHARA und mit "S" Glasarten des Unternehmens Schott gekennzeichnet sind.

Die Radien und Abstände sind vorstehend in den Systemdaten und auch nachstehend in der weiteren Beschreibung ohne Einheit versehen. Die Einheit kann entsprechend geeignet gewählt werden. Beispielsweise ist als Einheit "mm" vorgesehen. Die **Figuren 1A und 2A** sind Darstellungen für einen Objektabstand von 490mm. Hier betragen D1 8,555336 sowie D2 0,199678. Die **Figuren 1B uns 2B** sind Darstellungen für einen Objektabstand "unendlich". Hier betragen D1 0,550708 und D2 8,504306.

Flächen einzelner Linsen sind asphärisch ausgebildet. Diese Flächen sind mit einem "*" gekennzeichnet, wobei sich die asphärische Ausbildung nach der folgenden Gleichung mit den dazugehörigen Asphärenkoeffizienten ergibt:

$$z = \frac{ch^2}{1 + SQRT\{1 - (1+k)c^2h^2\}} + A_4h^4 + A_6h^6 + A_8h^8 + A_{10}h^{10} + A_{12}h^{12} + A_{14}h^{14} + A_{16}h^{16} + A_{18}h^{18} + A_{20}h^{20} + A_{22}h^{22}$$

wobei z der Pfeilhöhe der Fläche einer Linse parallel zur z-Achse, c der Krümmung der Fläche im Scheitel der Linse, k der konischen Konstanten sowie $A_4$ bis $A_{22}$ den asphärischen Koeffizienten der 4ten, 6ten, 8ten, 10ten, 12ten, 14ten, 16ten, 18ten, 20ten und 22ten Ordnung entsprechen.

Für die Fläche 1 gelten die folgenden Koeffizienten:

K = 0,000000
$A_4$ = 0,176377E-05

$A_6$ = -0,114120E-09
$A_8$ = 0,109855E-12,
$A_{10}$ = 0,160272E-17

Für die Fläche 30 gelten die folgenden Koeffizienten:

K = 0,000000
$A_4$ = 0,757045E-05
$A_6$ = - 0,974364E-08
$A_8$ = 0,172532E-09
$A_{10}$ = - 0,925029E-12
$A_{12}$ = 0.200901E-14

Das anamorphotische Objektiv 100 erfüllt die bereits oben genannten Bedingungen. So gilt insbesondere

$$s'_T = s'_W \quad \text{(Bedingung 2)},$$

wobei sowohl s'$_T$ als auch s'$_W$ bei dem hier dargestellten Ausführungsbeispiel 31,686579 beträgt. Ferner gilt auch

$$\frac{f'_T}{f'_W} = AF \quad \text{(Bedingung 1)},$$

wobei f'$_T$ = 50 beträgt und f'$_W$ =25 beträgt, so dass sich ein anamorphotischer Faktor von AF = 2 ergibt. Der Index T steht dabei für die erste Symmetrieebene in Form der Ebene Y-Z. Hingegen steht der Index W für die zweite Symmetrieebene in Form der Ebene X-Z.
Ferner ist bei dem dargestellten anamorphotischen Objektiv 100 vorgesehen, dass während eines Fokussiervorgangs mittels der Fokussiereinheit die folgende Bedingung erfüllt ist:

$$\frac{\beta_T}{\beta_W} = AF \quad \text{(Bedingung 3)}.$$

wobei $\beta_T$ und $\beta_W$ von der Position des abzubildenden Objekts O abhängen. Beispielsweise liegt mindestens einer der beiden vorgenannten Größen im Bereich zwischen 0,04 und 0,01, wobei die Bereichsgrenzen hier mit eingeschlossen sind. Es wird explizit darauf hingewiesen, dass die Erfindung auf die vorgenannten Werte nicht eingeschränkt ist.
Das dargestellte anamorphotische Objektiv 100 weist sämtliche Eigenschaften und Vorteile auf, die bereits weiter oben genannt sind.

**Bezugszeichenliste**

| 1 | Fläche 1 |
|---|---|
| 2 | Fläche 2 |
| 3 | Fläche 3 |
| 4 | Fläche 4 |
| 5 | Fläche 5 |
| 6 | Fläche 6 |
| 7 | Fläche 7 |
| 8 | Fläche 8 |
| 9 | Fläche 9 |
| 10 | Fläche 10 |
| 11 | Fläche 11 |
| 12 | Fläche 12 |
| 13 | Fläche 13 |
| 14 | Fläche 14 |

| 15 | Fläche 15 |
| 16 | Fläche 16 |
| 17 | Fläche 17 |
| 18 | Fläche 18 |
| 19 | Fläche 19 |
| 20 | Fläche 20 |
| 21 | Fläche 21 |
| 22 | Fläche 22 |
| 23 | Fläche 23 |
| 24 | Fläche 24 |
| 25 | Fläche 25 |
| 26 | Fläche 26 |
| 27 | Fläche 27 |
| 28 | Fläche 28 |
| 29 | Fläche 29 |
| 30 | Fläche 30 |
| 31 | Fläche 31 |
| 32 | Fläche 32 |
| 100 | anamorphotisches Objektiv |
| 200 | erster Objektivabschnitt |
| 300 | zweiter Objektivabschnitt |
| L1 | erste Linse |
| L2 | zweite Linse |
| L3 | dritte Linse |
| L4 | vierte Linse |
| L5 | fünfte Linse |
| L6 | sechste Linse |
| L7 | siebte Linse |
| L8 | achte Linse |
| L9 | neunte Linse |
| L10 | zehnte Linse |
| L11 | elfte Linse |
| L12 | zwölfte Linse |
| L13 | dreizehnte Linse |
| L14 | vierzehnte Linse |
| L15 | fünfzehnte Linse |
| L16 | sechzehnte Linse |
| L17 | siebzehnte Linse |
| BE | Bilderfassungseinheit |
| B | Blende |
| G1 | erste Linsengruppe |
| G2 | zweite Linsengruppe |
| G3 | dritte Linsengruppe |
| G4 | vierte Linsengruppe |
| O | Objekt |
| OA | optische Achse |

**Patentansprüche**

1. Anamorphotisches Objektiv (100) zur Abbildung eines Objekts (O) auf eine Bilderfassungseinheit (BE), wobei

- das anamorphotische Objektiv (100) mindestens eine erste Symmetrieebene (Y-Z) und mindestens eine zweite Symmetrieebene (X-Z) aufweist, wobei die erste Symmetrieebene (Y-Z) senkrecht zu der zweiten Symmetrieebene (X-Z) orientiert ist,

- das anamorphotische Objektiv (100) mindestens einen ersten Objektivabschnitt (200) und mindestens einen zweiten Objektivabschnitt (300) aufweist,
- von einem abzubildenden Objekt (O) in Richtung einer Bilderfassungselnheit (BE) zunächst der erste Objektivabschnitt (200) und anschließend der zweite Objektivebsohnitt (300) angeordnet sind, und wobei
- zwischen dem ersten Objektivabschnitt (200) und dem zweiten Objektivabschnitt (300) eine Blende (B) angeordnet ist,

wobei

- im ersten Objektivabschnitt (200) mindestens ein erstes anamorphotisches optisches Element (L5) angeordnet ist,
- Im zweiten Objektivabschnitt (300) mindestens ein zweites anamorphotisches optisches Element (L15) angeordnet ist, und wobei
- das anamorphotische Objektiv (100) die folgenden Bedingungen erfüllt:

$$\frac{f'_T}{f'_W} = AF$$

sowie

$$s'_T = s'_W$$

wobei

$f'_T$ die Brennwelte des anamorphotischen Objektivs (100) in Bezug zur ersten Symmetrieebene (Y-Z) ist,
$f'_W$ die Brennwelte des anamorphotischen Objektivs (100) in Bezug zur zweiten Symmetrieebene (X-Z) ist, wobei $f'_T$ größer als $f'_W$ ist,
AF ein vorgegebener anamorphotischer Faktor ist,
$s'_T$ ein erster Abstand des zweiten Objektivabschnitts (300) zu einer Bil-derfassungseinheit (BE) in der ersten Symmetrieebene (Y-Z) Ist, sowie
$s'_W$ ein zweiter Abstand des zweiten Objektivsabschnitts (300) zu einer Bilderfassungseinheit (BE) in der zweiten Symmetrieebene (X-Z) ist,

**dadurch gekennzeichnet, dass**

- das erste anamorphotische optische Element (L5), das In dem ersten Objektivabschnitt (200) angeordnet ist, in der ersten Symmetrieebene (Y-Z) eine erste Brechkraft und in der zweiten Symmetrieebene (X-Z) eine zweite Brechkraft aufweist, und dass
- die erste Brechkraft und die zweite Brechkraft unterschiedliche Vorzeichen aufweisen.

2. Anamorphotisches Objektiv (100) nach Anspruch 1, **dadurch gekennzeichnet, dass** der erste Objektivabschnitt (200) eine erste Linsengruppe (G1) mit negativer Brechkraft, eine zweite Linsengruppe (G2), eine dritte Linsengruppe (G3) und eine vierte Linsengruppe (G4) mit positiver Brechkraft aufweist, wobei von einem abzubildenden Objekt (O) In Richtung einer Bilderfassungseinheit (BE) zunächst die erste Linsengruppe (G1), dann die zweite Linsengruppe (G2), dann die dritte Linsengruppe (G3) und dann die vierte Linsengruppe (G4) angeordnet sind.

3. Anamorphotisches Objektiv (100) nach Anspruch 2, **dadurch gekennzeichnet, dass**

- die zweite Linsengruppe (G2) des ersten Objektivabschnitts (200) mit mindestens einer Fokussiereinheit (L3, L4) versehen ist, wobei die Fokussiereinheit (L3, L4) mindestens zwei rotationssymmetrische optische Elemente aufweist, und dass
- die erste Linsengruppe (G1) zur Erzeugung einer stigmatischen Abbildung ausgelegt ist.

4. Anamorphotisches Objektiv (100) nach Anspruch 3, **dadurch gekennzeichnet, dass** während eines Fokusslervorgangs mittels der Fokusslereinheit (L3, L4) die folgende Bedingung erfüllt ist:

$$\frac{\beta_T}{\beta_W} = AF$$

wobei

$\beta_T$ eine erste Vergrößerung des anamorphotischen Objektivs (100) in der ersten Symmetrieebene (Y-Z) Ist,
$\beta_W$ eine zweite Vergrößerung des anamorphotischen Objektivs (100) In der zweiten Symmetrieebene (X-Z) ist, sowie
AF der vorgegebene enamorphotische Faktor Ist.

5. Anamorphotisches Objektiv (100) nach Anspruch 3 oder 4, **dadurch gekennzeichnet, dass** die dritte Linsengruppe (G3) das erste anamorphotisehe optische Element (L5) aufweist, so dass die Fokussiereinheit (L3, L4) von einem abzubildenden Objekt (O) In Richtung einer Bilderfassungseinheit (BE) gesehen vor dem ersten anamorphotischen optischen Element (L5) angeordnet Ist.

6. Anamorphotisches Objektiv (100) nach einem der Ansprüche 3 bis 5, **dadurch gekennzeichnet, dass**

   - die Fokussiereinheit mindestens ein erstes Linsenelement (L3) und mindestens ein zweites Linsenelement (L4) aufweist,
   - das erste Linsenelement (L3) eine erste Linsenbrechkraft und das zweite Linsenelement (L4) eine zweite Linsenbrechkraft aufweisen, und dass
   - die erste Linsenbrechkraft und die zweite Linsenbrechkraft unterschiedliche Vorzeichen aufweisen.

7. Anamorphotisches Objektiv (100) nach Anspruch 6, **dadurch gekennzeichnet, dass** das erste Linsenelement (L3) und das zweite Linsenelement (L4) ein Dublett bilden.

8. Anamorphotisches Objektiv (100) nach Anspruch 6 oder 7, **dadurch gekennzeichnet, dass** die Fokussiereinheit (L3, L4) mindestens eines der folgenden Merkmale aufweist:

   - das erste Linsenelement (L3) weist mindestens eine erste Fläche auf, die asphärisch ausgebildet ist, oder
   - das zweite Linsenelement (4) weist mindestens eine zweite Fläche auf, die asphärisch ausgebildet Ist.

9. Anamorphotisches Objektiv (100) nach einem der vorangehenden Ansprüche, **dadurch gekennzeichnet, dass** die erste Brechkraft positiv ist und die zweite Brechkraft negativ ist, oder dass die erste Brechkraft negativ ist und die zweite Brechkraft positiv ist.

10. Anamorphotisches Objektiv (100) nach einem der vorangehenden Ansprüche, **dadurch gekennzeichnet, dass** zusätzlich zu dem ersten anamorphotischen optischen Element (L5) ein weiteres anamorphotisches optisches Element In Form eines dritten anamorphotischen Elements (L7) In dem ersten Objektivabschnitt (200) angeordnet Ist.

11. Anamorphotisches Objektiv (100) nach Anspruch 10, **dadurch gekennzeichnet, dass**

   - das dritte anamorphotische optische Element (L7) In der ersten Symmetrieebene (Y-Z) eine dritte Brechkraft und in der zweiten Symmetrieebene (X-Z) eine vierte Brechkraft aufweist,
   - die erste Brechkraft des ersten anamorphotischen optischen Elements (L5) in der ersten Symmetrieebene (Y-Z) und die dritte Brechkraft des dritten anamorphotischen optischen Elements (L7) in der ersten Symmetrieebene (Y-Z) unterschiedliche Vorzeichen aufweisen, und dass
   - die zweite Brechkraft des ersten anamorphotischen optischen Elements (L5) in der zweiten Symmetrieebene (X-Z) und die vierte Brechkraft des dritten anamorphotischen optischen Elements (L7) in der zweiten Symmetrieebene (X-Z) unterschiedliche Vorzeichen aufweisen.

12. Anamorphotisches Objektiv (100) nach einem der vorangehenden Ansprüche, **dadurch gekennzeichnet, dass** zusätzlich zu dem zweiten anamorphotischen optischen Element (L15) ein weiteres anamorphotisches optisches Element In Form eines vierten anamorphotischen optischen Elements (L16) in dem zweiten Objektivabschnitt (300) angeordnet Ist.

13. Anamorphotisches Objektiv (100) nach Anspruch 12, **dadurch gekennzeichnet, dass**

- das zweite anamorphotische optische Element (L15) eine fünfte Brechkraft in der ersten Symmetrieebene (Y-Z) und eine sechste Brechkraft in der zweiten Symmetrieebene (X-Z) aufweist,
- das vierte anamorphotische optische Element (L16) eine siebte Brechkraft In der ersten Symmetrieebene (Y-Z) und eine achte Brechkraft In der zweiten Symmetrieebene (X-Z) aufweist,
- die fünfte Brechkraft des zweiten anamorphotischen optischen Elements (L15) und die siebte Brechkraft des vierten anamorphotischen optischen Elements (L16) in der ersten Symmetrieebene (Y-Z) unterschiedliche Vorzeichen aufweisen, und dass
- die sechste Brechkraft des zweiten anamorphotischen optischen Elements (L15) und die achte Brechkraft das vierten anamorphotischen optischen Elements (L16) In der zweiten Symmetrieebene (X-Z) unterschiedliche Vorzeichen aufweisen.

14. Anamorphotisches Objektiv (100) nach einem der Ansprüche 10 bis 13, **dadurch gekennzeichnet, dass** das anamorphotische Objektiv (100) mindestens eines der nachfolgenden Merkmale aufweist:

- das erste anamorphotische optische Element und das dritte anamorphotische optische Element sind an einer ersten anamorphotischen Fläche miteinander verkittet und bilden ein erstes anamorphotisches Dublett; oder
- das zweite anamorphotische optische Element (L15) und das vierte anamorphotische optische Element (L16) sind an einer zweiten anamorphotischen Fläche miteinander verkittet und bilden ein zweites anamorphotisches Dublett.

15. Anamorphotisches Objektiv (100) nach einem der Ansprüche 2 bis 14, **dadurch gekennzeichnet, dass**

- in der ersten Linsengruppe (G1) mindestens eine asphärische Fläche (Fläche 1) angeordnet Ist, und/oder
- In der ersten Linsengruppe (G1) mindestens eine Linse aus elnem Material angeordnet Ist, welches eine Abbezahl größer oder gleich 80 aufweist, und/oder
- zwischen der zweiten Linsengruppe (G2) und der Blende (B) mindestens zwei Linsen mit positiver Brechkraft angeordnet sind und dass die zwei Linsen aus einem Material ausgebildet sind, das eine Abbezahl größer oder gleich 80 aufweist.

16. Anamorphotisches Objektiv (100) nach einem der vorangehenden Ansprüche, **dadurch gekennzeichnet, dass**

- in der zweiten Symmetrieebene (X-Z) das erste anamorphotische optische Element (L5) eine negative Brechkraft aufweist,
- In der zweiten Symmetrieebene (X-Z) das zweite anamorphotische optische Element (L15) eine positive Brechkraft aufweist,
- In der ersten Symmetrieebene (Y-Z) das erste anamorphotische optische Element (L5) eine positive Brechkraft aufweist, und dass
- In der ersten Symmetrieebene (Y-Z) das zweite anamorphotische optische Element (L15) eine negative Brechkraft aufweist.

17. Anamorphotisches Objektiv (100) nach einem der vorangehenden Ansprüche falls von Anspruch 10 abhängig, **dadurch gekennzeichnet, dass**

- In der zweiten Symmetrieebene (X-Z) das erste anamorphotische optische Element (L5) eine negative Brechkraft aufweist,
- In der zweiten Symmetrieebene (X-Z) das dritte anamorphotische optische Element (L7) eine positive Brechkraft aufweist,
- In der ersten Symmetrieebene (Y-Z) das erste anamorphotische optische Element (L5) eine positive Brechkraft aufweist, und dass
- in der ersten Symmetrieebene (Y-Z) das dritte anamorphotische optische Element (L7) eine negative Brechkraft aufweist.

18. Anamorphotisches Objektiv nach einem der vorangehenden Ansprüche falls von Anspruch 12 abhängig, **dadurch gekennzeichnet, dass**

- In der zweiten Symmetrieebene (X-Z) das zweite anamorphotische optische Element (L15) eine negative Brechkraft aufweist,
- in der zweiten Symmetrieebene (X-Z) das vierte anamorphotische optische Element (L14) eine positive Brechkraft aufweist,
- in der ersten Symmetrieebene (Y-Z) das zweite anamorphotische optische Element (L15) eine positive Brechkraft aufweist, und dass
- in der ersten Symmetrieebene (Y-Z) das vierte anamorphotische optische Element (L16) eine negative Brechkraft aufweist.

19. Anamorphotisches Objektiv (100) nach Anspruch 14, **dadurch gekennzeichnet, dass** das zweite anamorphotische Dublett In dem zweiten Objektivabschnitt (300) In der zweiten Symmetrieebene (X-Z) eine positive Brechkraft aufweist und in der ersten Symmetrieebene (Y-Z) eine negative Brechkraft aufweist.

20. Anamorphotisches Objektiv (100) nach einem der vorangehenden Ansprüche, **dadurch gekennzeichnet, dass**

- das anamorphotische Objektiv (100) eine erste Linsenfläche (Fläche 1) aufweist, die derart angeordnet ist, dass zwischen einem abzubildenden Objekt (O) und der ersten Linsenfläche (Fläche 1) keine weitere Linsenfläche angeordnet ist,
- das anamorphotische Objektiv (100) eine zweite Linsenfläche (Fläche 32) aufweist, die derart angeordnet Ist, dass zwischen der zweiten Linsenfläche (Fläche 32) und einer Bilderfassungseinheit (BE) keine weitere Linsenfläche angeordnet ist, und dass
- der Abstand der ersten Linsenfläche (Fläche 1) bis zu der Blende (B) mindestens drei mal größer ist als der Abstand der Blende (B) zur zweiten Linsenfläche (Fläche 32).

21. Optisches System mit einer Bilderfassungseinheit (BE) und einem anamorphotischen Objektiv (100) nach einem der vorangehenden Ansprüche.

## Claims

1. Anamorphic objective (100) for imaging an object (O) onto an image capturing unit (BE), wherein

- the anamorphic objective (100) has at least one first plane of symmetry (Y-Z) and at least one second plane of symmetry (X-Z), wherein the first plane of symmetry (Y-Z) is oriented perpendicular to the second plane of symmetry (X-Z),
- the anamorphic objective (100) has at least one first objective portion (200) and at least one second objective portion (300),
- first the first objective portion (200) and then the second objective portion (300) are arranged from an object (O) to be imaged in the direction of an image capturing unit (BE), and wherein
- a stop (B) is arranged between the first objective portion (200) and the second objective portion (300), wherein
- at least one first anamorphic optical element (L5) is arranged in the first objective portion (200),
- at least one second anamorphic optical element (L15) is arranged in the second objective portion (300), and wherein
- the anamorphic objective (100) satisfies the following conditions: and

$$s'_\tau = s'_W$$

wherein

f'$_\tau$ is the focal length of the anamorphic objective (100) with respect to the first plane of symmetry (Y-Z),
f'$_W$ is the focal length of the anamorphic objective (100) with respect to the second plane of symmetry (X-Z), wherein f'$_\tau$ is greater than f'$_W$,
AF is a prespecified anamorphic factor,
s'$_\tau$ is a first distance of the second objective portion (300) from an image capturing unit (BE) in the first plane of symmetry (Y-Z), and
s'$_W$ is a second distance of the second objective portion (300) from an image capturing unit (BE) in the second plane of symmetry (X-Z),

**characterized in that**

- the first anamorphic optical element (L5) arranged in the first objective portion (200) has a first refractive power in the first plane of symmetry (Y-Z) and has a second refractive power in the second plane of symmetry (X-Z), and **in that**
- the first refractive power and the second refractive power have different signs.

2. Anamorphic objective (100) according to Claim 1, **characterized in that** the first objective portion (200) has a first lens group (G1) with a negative refractive power, a second lens group (G2), a third lens group (G3) and a fourth lens group (G4) with positive refractive power, wherein first the first lens group (G1), then the second lens group (G2), then the third lens group (G3) and then the fourth lens group (G4) are arranged from an object (O) to be imaged in the direction of an image capturing unit (BE).

3. Anamorphic objective (100) according to Claim 2, **characterized in that**

- the second lens group (G2) of the first objective portion (200) is provided with at least one focusing unit (L3, L4), wherein the focusing unit (L3, L4) has at least two rotationally symmetric optical elements, and **in that**
- the first lens group (G1) is designed for producing a stigmatic image representation.

4. Anamorphic objective (100) according to Claim 3, **characterized in that** the following condition is satisfied during a focusing procedure by means of the focusing unit (L3, L4):

$$\frac{\beta_\tau}{\beta_W} = AF,$$

wherein

$\beta_\tau$ is a first magnification of the anamorphic objective (100) in the first plane of symmetry (Y-Z),
$\beta_W$ is a second magnification of the anamorphic objective (100) in the second plane of symmetry (X-Z), and
AF is the prespecified anamorphic factor.

5. Anamorphic objective (100) according to Claim 3 or 4, **characterized in that** the third lens group (G3) has the first anamorphic optical element (L5), with the result that the focusing unit (L3, L4) is arranged upstream of the first anamorphic optical element (L5) as viewed from an object (O) to be imaged in the direction of an image capturing unit (BE).

6. Anamorphic objective (100) according to one of Claims 3 to 5, **characterized in that**

- the focusing unit has at least one first lens element (L3) and at least one second lens element (L4),
- the first lens element (L3) has a first lens refractive power and the second lens element (L4) has a second lens refractive power, and **in that**
- the first lens refractive power and the second lens refractive power have different signs.

7. Anamorphic objective (100) according to Claim 6, **characterized in that** the first lens element (L3) and the second lens element (L4) form a doublet.

8. Anamorphic objective (100) according to Claim 6 or 7, **characterized in that** the focusing unit (L3, L4) has at least one of the following features:

- the first lens element (L3) has at least one first face having an aspheric embodiment, or
- the second lens element (4) has at least one second face having an aspheric embodiment.

9. Anamorphic objective (100) according to one of the preceding claims, **characterized in that**
the first refractive power is positive and the second refractive power is negative,
or **in that**
the first refractive power is negative and the second refractive power is positive.

10. Anamorphic objective (100) according to one of the preceding claims, **characterized in that**, in addition to the first anamorphic optical element (L5), a further anamorphic optical element in the form of a third anamorphic element (L7) is arranged in the first objective portion (200).

11. Anamorphic objective (100) according to Claim 10, **characterized in that**

- the third anamorphic optical element (L7) has a third refractive power in the first plane of symmetry (Y-Z) and a fourth refractive power in the second plane of symmetry (X-Z),
- the first refractive power of the first anamorphic optical element (L5) in the first plane of symmetry (Y-Z) and the third refractive power of the third anamorphic optical element (L7) in the first plane of symmetry (Y-Z) have different signs, and **in that**
- the second refractive power of the first anamorphic optical element (L5) in the second plane of symmetry (X-Z) and the fourth refractive power of the third anamorphic optical element (L7) in the second plane of symmetry (X-Z) have different signs.

12. Anamorphic objective (100) according to one of the preceding claims, **characterized in that**, in addition to the second anamorphic optical element (L15), a further anamorphic optical element in the form of a fourth anamorphic optical element (L16) is arranged in the second objective portion (300).

13. Anamorphic objective (100) according to Claim 12, **characterized in that**

- the second anamorphic optical element (L15) has a fifth refractive power in the first plane of symmetry (Y-Z) and a sixth refractive power in the second plane of symmetry (X-Z),
- the fourth anamorphic optical element (L16) has a seventh refractive power in the first plane of symmetry (Y-Z) and an eighth refractive power in the second plane of symmetry (X-Z),
- the fifth refractive power of the second anamorphic optical element (L15) and the seventh refractive power of the fourth anamorphic optical element (L16) in the first plane of symmetry (Y-Z) have different signs, and **in that**
- the sixth refractive power of the second anamorphic optical element (L15) and the eighth refractive power of the fourth anamorphic optical element (L16) in the second plane of symmetry (X-Z) have different signs.

14. Anamorphic objective (100) according to one of Claims 10 to 13, **characterized in that** the anamorphic objective (100) has at least one of the following features:

- the first anamorphic optical element and the third anamorphic optical element are cemented together at a first anamorphic face and form a first anamorphic doublet; or
- the second anamorphic optical element (L15) and the fourth anamorphic optical element (L16) are cemented together at a second anamorphic face and form a second anamorphic doublet.

15. Anamorphic objective (100) according to one of Claims 2 to 14, **characterized in that**

- at least one aspheric face (face 1) is arranged in the first lens group (G1), and/or
- at least one lens from a material having an Abbe number of greater than or equal to 80 is arranged in the first lens group (G1), and/or
- at least two lenses having a positive refractive power are arranged between the second lens group (G2) and the stop (B) and **in that** the second lenses are made from a material having an Abbe number of greater than or equal to 80.

16. Anamorphic objective (100) according to one of the preceding claims, **characterized in that**

- the first anamorphic optical element (L5) has a negative refractive power in the second plane of symmetry (X-Z),
- the second anamorphic optical element (L15) has a positive refractive power in the second plane of symmetry (X-Z),
- the first anamorphic optical element (L5) has a positive refractive power in the first plane of symmetry (Y-Z), and **in that**
- the second anamorphic optical element (L15) has a negative refractive power in the first plane of symmetry (Y-Z).

17. Anamorphic objective (100) according to one of the preceding claims if dependent on Claim 10, **characterized in that**

- the first anamorphic optical element (L5) has a negative refractive power in the second plane of symmetry (X-Z),
- the third anamorphic optical element (L7) has a positive refractive power in the second plane of symmetry (X-Z),

- the first anamorphic optical element (L5) has a positive refractive power in the first plane of symmetry (Y-Z), and **in that**
- the third anamorphic optical element (L7) has a negative refractive power in the first plane of symmetry (Y-Z).

**18.** Anamorphic objective according to one of the preceding claims if dependent on Claim 12, **characterized in that**

- the second anamorphic optical element (L15) has a negative refractive power in the second plane of symmetry (X-Z),
- the fourth anamorphic optical element (L14) has a positive refractive power in the second plane of symmetry (X-Z),
- the second anamorphic optical element (L15) has a positive refractive power in the first plane of symmetry (Y-Z), and **in that**
- the fourth anamorphic optical element (L16) has a negative refractive power in the first plane of symmetry (Y-Z).

**19.** Anamorphic objective (100) according to Claim 14, **characterized in that** the second anamorphic doublet in the second objective portion (300) has a positive refractive power in the second plane of symmetry (X-Z) and a negative refractive power in the first plane of symmetry (Y-Z).

**20.** Anamorphic objective (100) according to one of the preceding claims, **characterized in that**

- the anamorphic objective (100) has a first lens face (face 1) that is arranged such that no further lens face is arranged between an object (O) to be imaged and the first lens face (face 1),
- the anamorphic objective (100) has a second lens face (face 32) that is arranged such that no further lens face is arranged between the second lens face (face 32) and an image capturing unit (BE), and **in that**
- the distance of the first lens face (face 1) from the stop (B) is at least three times the distance of the stop (B) from the second lens face (face 32).

**21.** Optical system having an image capturing unit (BE) and an anamorphic objective (100) according to one of the preceding claims.

**Revendications**

**1.** Objectif anamorphoseur (100) permettant de représenter un objet (O) sur une unité de capture d'image (BE), dans lequel

- l'objectif anamorphoseur (100) présente au moins un premier plan de symétrie (Y-Z) et au moins un deuxième plan de symétrie (X-Z), le premier plan de symétrie (Y-Z) étant orienté perpendiculairement au deuxième plan de symétrie (X-Z),
- l'objectif anamorphoseur (100) présente au moins une première partie d'objectif (200) et au moins une deuxième partie d'objectif (300),
- en partant d'un objet (O) à représenter en direction d'une unité de capture d'image (BE), d'abord la première partie d'objectif (200) et ensuite la deuxième partie d'objectif (300) sont disposées, et dans lequel
- un diaphragme (B) est disposé entre la première partie d'objectif (200) et la deuxième partie d'objectif (300),

dans lequel

- au moins un premier élément optique anamorphoseur (L5) est disposé dans la première partie d'objectif (200),
- au moins un deuxième élément optique anamorphoseur (L15) est disposé dans la deuxième partie d'objectif (300), et dans lequel
- l'objectif anamorphoseur (100) remplit les conditions suivantes :

$$\frac{f'_T}{f'_W} = AF$$

ainsi que

$$S'_T = S'_W$$

où

$f'_T$ est la distance focale de l'objectif anamorphoseur (100) par rapport au premier plan de symétrie (Y-Z), $f'_W$ est la distance focale de l'objectif anamorphoseur (100) par rapport au deuxième plan de symétrie (X-Z), où $f'_T$ est supérieur à $f'_W$,

AF est un facteur anamorphoseur prédéfini,

$s'_T$ est une première distance de la deuxième partie d'objectif (300) à une unité de capture d'image (BE) dans le premier plan de symétrie (Y-Z), et
$s'_W$ est une deuxième distance de la deuxième partie d'objectif (300) à une unité de capture d'image (BE) dans le deuxième plan de symétrie (X-Z),

**caractérisé en ce que**

- le premier élément optique anamorphoseur (L5), qui est disposé dans la première partie d'objectif (200), présente dans le premier plan de symétrie (Y-Z) un premier pouvoir réfringent et présente dans le deuxième plan de symétrie (X-Z) un deuxième pouvoir réfringent, et **en ce que**
- le premier pouvoir réfringent et le deuxième pouvoir réfringent présentent des signes différents.

2. Objectif anamorphoseur (100) selon la revendication 1, **caractérisé en ce que** la première partie d'objectif (200) présente un premier groupe de lentilles (G1) ayant un pouvoir réfringent négatif, un deuxième groupe de lentilles (G2), un troisième groupe de lentilles (G3) et un quatrième groupe de lentilles (G4) ayant un pouvoir réfringent positif, dans lequel, en partant d'un objet (O) à représenter en direction d'une unité d'acquisition d'image (BE), d'abord le premier groupe de lentilles (G1), ensuite le deuxième groupe de lentilles (G2), ensuite le troisième groupe de lentilles (G3) et ensuite le quatrième groupe de lentilles (G4) sont disposés.

3. Objectif anamorphoseur (100) selon la revendication 2, **caractérisé en ce que**

- le deuxième groupe de lentilles (G2) de la première partie d'objectif (200) est doté d'au moins une unité de focalisation (L3, L4), l'unité de focalisation (L3, L4) présentant au moins deux éléments optiques à symétrie de révolution, et **en ce que**
- le premier groupe de lentilles (G1) est conçu pour générer une représentation stigmatique.

4. Objectif anamorphoseur (100) selon la revendication 3, **caractérisé en ce que** pendant une opération de focalisation au moyen de l'unité de focalisation (L3, L4), la condition suivante est remplie :

$$\frac{\beta_T}{\beta_W} = AF$$

où

$\beta_T$ est une première puissance de grossissement de l'objectif anamorphoseur (100) dans le premier plan de symétrie (Y-Z),
$\beta_W$ est une deuxième puissance de grossissement de l'objectif anamorphoseur (100) dans le deuxième plan de symétrie (X-Z), et
AF est le facteur anamorphoseur prédéfini.

5. Objectif anamorphoseur (100) selon la revendication 3 ou 4, **caractérisé en ce que** le troisième groupe de lentilles (G3) présente le premier élément optique anamorphoseur (L5) de sorte que l'unité de focalisation (L3, L4) est disposée avant le premier élément optique anamorphoseur (L5), vu en partant de l'objet (O) à représenter en direction d'une unité de capture d'image (BE).

6. Objectif anamorphoseur (100) selon l'une quelconque des revendications 3 à 5, **caractérisé en ce que**

- l'unité de focalisation présente au moins un premier élément de lentille (L3) et au moins un deuxième élément de lentille (L4),
- le premier élément de lentille (L3) présente un premier pouvoir réfringent de lentille et le deuxième élément de lentille (L4) présente un deuxième pouvoir réfringent de lentille, et **en ce que**
- le premier pouvoir réfringent de lentille et le deuxième pouvoir réfringent de lentille présentent des signes différents.

7. Objectif anamorphoseur (100) selon la revendication 6, **caractérisé en ce que** le premier élément de lentille (L3) et le deuxième élément de lentille (L4) forment un doublet.

8. Objectif anamorphoseur (100) selon la revendication 6 ou 7, **caractérisé en ce que** l'unité de focalisation (L3, L4) présente au moins l'une des particularités suivantes :

   - le premier élément de lentille (L3) présente au moins une première surface qui est réalisée de manière asphérique, ou
   - le deuxième élément de lentille (4) présente au moins une deuxième surface qui est réalisée de manière asphérique.

9. Objectif anamorphoseur (100) selon l'une quelconque des revendications précédentes, **caractérisé en ce que** le premier pouvoir réfringent est positif et le deuxième pouvoir réfringent est négatif, ou **en ce que** le premier pouvoir réfringent est négatif et le deuxième pouvoir réfringent est positif.

10. Objectif anamorphoseur (100) selon l'une quelconque des revendications précédentes, **caractérisé en ce qu'**en plus du premier élément optique anamorphoseur (L5), un élément optique anamorphoseur supplémentaire sous la forme d'un troisième élément anamorphoseur (L7) est disposé dans la première partie d'objectif (200).

11. Objectif anamorphoseur (100) selon la revendication 10, **caractérisé en ce que**

   - le troisième élément optique anamorphoseur (L7) présente dans le premier plan de symétrie (Y-Z) un troisième pouvoir réfringent et dans le deuxième plan de symétrie (X-Z) un quatrième pouvoir réfringent,
   - le premier pouvoir réfringent du premier élément optique anamorphoseur (L5) dans le premier plan de symétrie (Y-Z) et le troisième pouvoir réfringent du troisième élément optique anamorphoseur (L7) dans le premier plan de symétrie (Y-Z) présentent des signes différents, et **en ce que**
   - le deuxième pouvoir réfringent du premier élément optique anamorphoseur (L5) dans le deuxième plan de symétrie (X-Z) et le quatrième pouvoir réfringent du troisième élément optique anamorphoseur (L7) dans le deuxième plan de symétrie (X-Z) présentent des signes différents.

12. Objectif anamorphoseur (100) selon l'une quelconque des revendications précédentes, **caractérisé en ce qu'**en plus du deuxième élément optique anamorphoseur (L15), un élément optique anamorphoseur supplémentaire sous la forme d'un quatrième élément optique anamorphoseur (L16) est disposé dans la deuxième partie d'objectif (300).

13. Objectif anamorphoseur (100) selon la revendication 12, **caractérisé en ce que**

   - le deuxième élément optique anamorphoseur (L15) présente un cinquième pouvoir réfringent dans le premier plan de symétrie (Y-Z) et un sixième pouvoir réfringent dans le deuxième plan de symétrie (X-Z),
   - le quatrième élément optique anamorphoseur (L16) présente un septième pouvoir réfringent dans le premier plan de symétrie (Y-Z) et un huitième pouvoir réfringent dans le deuxième plan de symétrie (X-Z),
   - le cinquième pouvoir réfringent du deuxième élément optique anamorphoseur (L15) et le septième pouvoir réfringent du quatrième élément optique anamorphoseur (L16) dans le premier plan de symétrie (Y-Z) présentent des signes différents, et **en ce que**
   - le sixième pouvoir réfringent du deuxième élément optique anamorphoseur (L15) et le huitième pouvoir réfringent du quatrième élément optique anamorphoseur (L16) dans le deuxième plan de symétrie (X-Z) présentent des signes différents.

14. Objectif anamorphoseur (100) selon l'une quelconque des revendications 10 à 13, **caractérisé en ce que** l'objectif anamorphoseur (100) présente au moins l'une des particularités suivantes :

   - le premier élément optique anamorphoseur et le troisième élément optique anamorphoseur sont cimentés ensemble sur une première surface anamorphoseuse et forment un premier doublet anamorphoseur ; ou
- le deuxième élément optique anamorphoseur (L15) et le quatrième élément optique anamorphoseur (L16) sont cimentés ensemble sur une deuxième surface anamorphoseuse et forment un doublet anamorphoseur.

**15.** Objectif anamorphoseur (100) selon l'une quelconque des revendications 2 à 14, **caractérisé en ce que**

- au moins une surface asphérique (surface 1) est disposée dans le premier groupe de lentilles (G1), et/ou
- au moins une lentille, composée d'un matériau qui présente un nombre d'Abbe supérieur ou égal à 80, est disposée dans le premier groupe de lentilles (G1), et/ou
- au moins deux lentilles ayant un pouvoir réfringent positif sont disposées entre le deuxième groupe de lentilles (G2) et le diaphragme (B), et **en ce que** les deux lentilles sont réalisées d'un matériau qui présente un nombre d'Abbe supérieur ou égal à 80.

**16.** Objectif anamorphoseur (100) selon l'une quelconque des revendications précédentes, **caractérisé en ce que**

- le premier élément optique anamorphoseur (L5) présente un pouvoir réfringent négatif dans le deuxième plan de symétrie (X-Z),
- le deuxième élément optique anamorphoseur (L15) présente un pouvoir réfringent positif dans le deuxième plan de symétrie (X-Z),
- le premier élément optique anamorphoseur (L5) présente un pouvoir réfringent positif dans le premier plan de symétrie (Y-Z), et **en ce que**
- le deuxième élément optique anamorphoseur (L15) présente un pouvoir réfringent négatif dans le premier plan de symétrie (Y-Z).

**17.** Objectif anamorphoseur (100) selon l'une quelconque des revendications précédentes, si elle dépend de la revendication 10, **caractérisé en ce que**

- le premier élément optique anamorphoseur (L5) présente un pouvoir réfringent négatif dans le deuxième plan de symétrie (X-Z),
- le troisième élément optique anamorphoseur (L7) présente un pouvoir réfringent positif dans le deuxième plan de symétrie (X-Z),
- le premier élément optique anamorphoseur (L5) présente un pouvoir réfringent positif dans le premier plan de symétrie (Y-Z), et **en ce que**
- le troisième élément optique anamorphoseur (L7) présente un pouvoir réfringent négatif dans le premier plan de symétrie (Y-Z).

**18.** Objectif anamorphoseur selon l'une quelconque des revendications précédentes, si elle dépend de la revendication 12, **caractérisé en ce que**

- le deuxième élément optique anamorphoseur (L15) présente un pouvoir réfringent négatif dans le deuxième plan de symétrie (X-Z),
- le quatrième élément optique anamorphoseur (L14) présente un pouvoir réfringent positif dans le deuxième plan de symétrie (X-Z),
- le deuxième élément optique anamorphoseur (L15) présente un pouvoir réfringent positif dans le premier plan de symétrie (Y-Z), et **en ce que**
- le quatrième élément optique anamorphoseur (L16) présente un pouvoir réfringent négatif dans le premier plan de symétrie (Y-Z).

**19.** Objectif anamorphoseur (100) selon la revendication 14, **caractérisé en ce que** le deuxième doublet anamorphoseur dans la deuxième partie d'objectif (300) présente dans le deuxième plan de symétrie (X-Z) un pouvoir réfringent positif et dans le premier plan de symétrie (Y-Z) un pouvoir réfringent négatif.

**20.** Objectif anamorphoseur (100) selon l'une quelconque des revendications précédentes, **caractérisé en ce que**

- l'objectif anamorphoseur (100) présente une première surface de lentille (surface 1), qui est disposée de telle sorte qu'entre un objet (O) à représenter et la première surface de lentille (surface 1), aucune surface de lentille supplémentaire n'est disposée,
- l'objectif anamorphoseur (100) présente une deuxième surface de lentille (surface 32) qui est disposée de telle sorte qu'entre la deuxième surface de lentille (surface 32) et une unité de capture d'image (BE), aucune autre surface de lentille n'est disposée, et **en ce que**

- la distance de la première surface de lentille (surface 1) au diaphragme (B) est au moins trois fois supérieure à la distance du diaphragme (B) à la deuxième surface de lentille (surface 32).

21. Système optique comprenant une unité de capture d'image (BE) et un objectif anamorphoseur (100) selon l'une quelconque des revendications précédentes.

Fig. 1A

Fig. 1B

EP 2 535 752 B1

Fig. 2A

Fig. 2B

EP 2 535 752 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3629438 A1
- US 4362366 A
- US 20060050403 A1
- DE 102008021341 A1
- US 20070133107 A1